Europäisches Patentamt

European Patent Office

Office européen des brevets

(19)

(11) Publication number: **0 180 554**
A1

(12) # EUROPEAN PATENT APPLICATION

(21) Application number: **85830270.6**

(22) Date of filing: **28.10.85**

(51) Int. Cl.⁴: **B 62 D 31/00**

(30) Priority: **02.11.84 IT 6809484**

(43) Date of publication of application: **07.05.86**
**Bulletin 86/19**

(84) Designated Contracting States: **DE FR GB SE**

(71) Applicant: **FIAT AUTO S.p.A., Corso Giovanni Agnelli 200,
I-10135 Torino (IT)**

(72) Inventor: **Giorgi, Marco, Via De Canal 46, I-10137 Torino
(IT)**
Inventor: **Piritore, Giuseppe, Via Guarini 48,
I-10078 Venaria Torino (IT)**

(74) Representative: **Notaro, Giancarlo et al, c/o
Jacobacci-Casetta & Perani S.p.A. Via Alfieri, 17,
I-10121 Torino (IT)**

(54) **Method of assembling motor vehicle bodies for the production of bodies of different types, and a body obtained by this method.**

(57) Motor vehicle bodies of different types are assembled by the prearrangement of a standard type of floor (2) and sides (3) forming a single pre-assembled space structure (1) common to all types of body, and a series of different types of subassembly (5, 8, 12) for completing the structure, which can be assembled with the latter in a second step to produce the different types of body. At least a part of each subassembly for completion of the body comprises a bottom wall (9) and two side walls (10).

EP 0 180 554 A1

ACTORUM AG

Method of assembling motor vehicle bodies for the production of bodies of different types, and a body obtain-
ed by this method.

The present invention relates to a method of
assembling motor vehicle bodies.

In the production of unitized bodies for cars,
the technique of using a standard chassis for
different bodies in the same "family" of car
is already known.  For example, the chassis of
a saloon car is also used for a sports model
of the car  and/or a model for industrial  use.
Normally, these standard chassis are formed
by the floor of the body and the lower side
structures fixed thereto.  Sometimes the
structure is completed in correspondence with
the engine compartment with lateral framework
and covering structures which extend halfway
up the car.

The object of the invention is to achieve a
method of assembly usable for the production
of bodies of different types (for example, two-
bay, three-bay and estate versions,perhaps with
different rear overhangs), which is as simple
and flexible as possible and, in particular,
permits the assembly equipment to be adapted
easily and rapidly to each new type of body which
is put into production.

According to the principle characteristic of the
invention, there are prearranged a standard type
of floor and sides forming a single pre-assembled
space structure (a three-dimensional frame of

0180554

reticulated structure) common to all types of body, and a series of different types of subassembly for completing the structure, which can be assembled with the latter in a' second step to produce the different types of body.

The pre-assembled space structure is distinguished from the standard frames of the prior art in that it also includes the sides of the car, the windscreen frame and any cross members interconnecting the sides.

According to a further characteristic, at least a part of each subassembly for completing the body comprises a bottom wall and two side walls for the completion of the floor and the sides of the pre-assembled structure.

In one embodiment, the subassemblies for completing the pre-assembled structure are used to complete the rear part of the body. In this case, each completing subassembly also includes a rear wall for the completion of the body.

The invention will now be described with reference to the appended drawings, provided purely by way of non-limiting example, in which:

Figure 1 is a perspective view of the body module used in the method according to the invention;

Figure 2 is an exploded perspective view of the module of Figure 1, showing the subassemblies which make up this module;

Figures 3 to 7 are perspective views illustrating five different types of subassembly for completing the body module, and

Figure 8 illustrates three different types of roof corresponding to the various types of body to be assembled.

In the embodiment illustrated in the appended drawings, the method according to the invention is used to assemble different types of body corresponding to different versions of the same model of body (two-bay, three-bay and estate versions). In this case, the different types of body to be assembled are substantially similar to each other as regards the framework of the front and central parts of the body but differ in the rear part, while, for stylistic reasons, the visible parts forming parts of the subassemblies for completion of the completing and finishing panels may or may not differ.

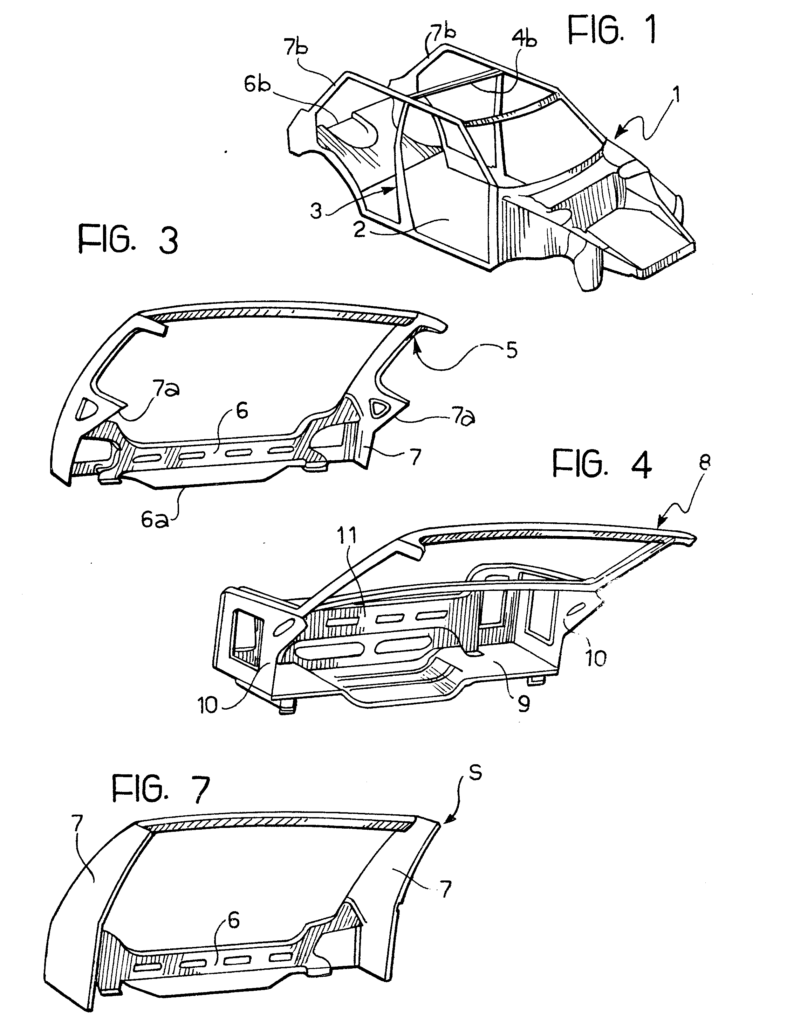

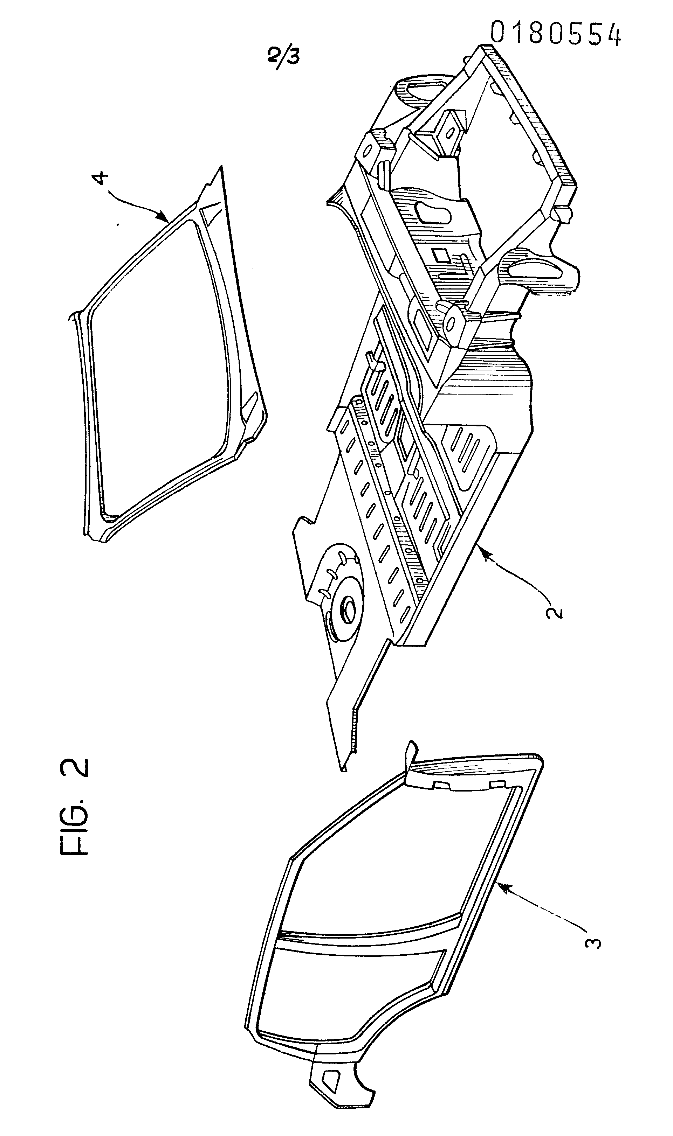

According to the method of the present invention, all the aforesaid different types of body are assembled from a pre-assembled space structure 1, shown in Figure 1, which is common to all the types of body. The structure 1 is made up essentially of a floor 2 (see Figure 2) which is standard to all the different types of body, two sides 3 (only the right-hand side is illustrated in Figure 2) which are also standard for all the different types of body, and an element 4b for connecting the two sides 3. Figure 2 also illustrates the support frame 4 for the windscreen, which is also standard for all the different types of body. As mentioned, Figure 2 illustrates only the main subassemblies of the structure 1.

Figures 3 to 7 illustrate five different types of subassembly for completion of the structure 1.

The subassembly illustrated in Figure 3 (generally indicated 5) corresponds to the two-bay version of the model of body, and comprises a rear part 6 and two small side walls 7 having frontal flanges 6a, 7a intended to be carried by corresponding flanges 6b, 7b on the rear part of the body module 1. As mentioned, the assembly of the subassembly 5 on the rear part of the structure 1 allows a two-bay version of the body to be produced.

The three-bay version, however, is produced by assembling the subassembly generally indicated 8 in Figure 4 on the rear part of the body module 1. This subassembly comprises a bottom wall 9 for completion of the floor 2 of the structure 1, two side walls 10 for completion of the sides 3

of the structure 1, and a rear part 11.

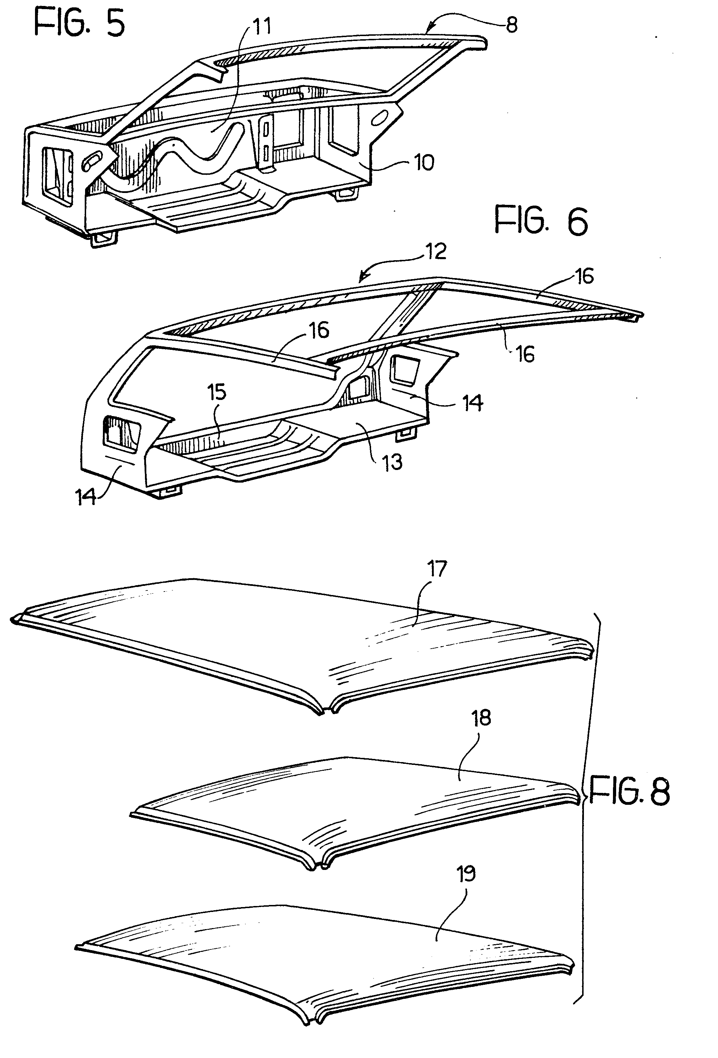

Figure 5 illustrates a variant of the subassembly
8, which differs from the subassembly shown in
Figure 4 only in that is has a different
configuration of the rear wall 11.

Figure 6 illustrates a subassembly 12 corresponding
to the  estate version of the model  of body,
comprising a bottom wall 13 for completion of
the floor 2 of the body module 1, two side
walls 14 for completion of the sides 3 of the
body module 1, a rear wall 15, and an auxiliary
cross member 16 which connects two upper
longitudinal members 16a forming parts of the
side walls 14.

Finally, Figure 7 shows a variant of the
subassembly illustrated in Figure 3, which differs
from the latter substantially in that it has
a different configuration of the side walls 7.

Figure 8 illustrates three different types of
roof 17, 18, 19 corresponding to the different
types of body.  The roof 17 is designed for the
estate version obtainable by assembling the
subassembly 12 on the body module 1.  The roof 18
is used in the case of assembly of the module 1
with the subassembly 8 of the type illustrated
in Figure 4 or Figure  5.  Lastly, the roof 19
corresponds to the use of the subassembly 5
illustrated in Figure 3 or the subassembly 5
illustrated in Figure 7.

Once a predetermined type of body has been assembled, the latter is completed by conventional techniques, with the addition of external finishing panels.

From the foregoing description, it is evident that the method according to the invention permits the flexibility of the system of production to be improved significantly, in that it allows the assembly equipment to be adapted easily and rapidly if it is desired to put a new type of body into production. The storage of the components intended to make up the body is also simplified, in that a predominant part of the body is constituted by standard elements of the same shape and size for all the different types of body.

Naturally, whilst the principle of the invention remains the same, the details of construction and forms of embodiment may be varied widely from that described and illustrated purely by way of example, without thereby departing from the scope of the present invention.

## CLAIMS

1. A method of assembling motor vehicle bodies for the production of bodies of different types, characterised in that there are prearranged a standard type of floor (2) and sides (13) forming a pre-assembled space structure (1) common to all types of body, and a series of different types of subassembly (5, 8, 12) for completing the structure (1), which can be assembled with the latter in a second step to produce the different types of body.

2. A method according to Claim 1, characterised in that at least part of each subassembly for completing the body comprises a bottom wall (9) and two side walls (10) for the completion of the floor (2) and of the sides (3) of the structure (1).

3. A method according to Claim 2, characterised in that the completing subassemblies are used to complete the rear part of the body.

4. A method according to Claim 3, characterised in that each completing subassembly includes a rear wall (6, 11, 15) for the completion of the body.

5. Motor vehicle body, characterised in that it is produced by the method defined in any one of the preceding claims.

0180554

FIG. 1

FIG. 3

FIG. 4

FIG. 7

FIG. 2

0180554

FIG. 5

11

8

10

FIG. 6

12

16

16

16

16

15

14

14

13

17

18

FIG. 8

19

0180554

European Patent
Office

**EUROPEAN SEARCH REPORT**

Application number

EP 85 83 0270

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | AUTOMATIVE ENGINEERING, vol. 90, no. 2, February 1982, pages 95-97, Dallas, Texas, US; D. SCOTT: "Hybrid car has bolt-on body elements" <br> * Page 95, left-hand column, lines 11-16; page 96, left-hand column, lines 1-12, right-hand column, lines 25-30; page 97, left-hand column, paragraph 1; figures * | 1-5 | B 62 D 31/00 |
| X | DE-A-2 403 088 (DAIMLER-BENZ) <br> * Page 4, lines 6-11; figures 1,2 * | 1,3,5 | |
| A | FR-A-1 345 128 (RENAULT) <br> * Abstract; figures 2,4-7 * | 1,3-5 | TECHNICAL FIELDS SEARCHED (Int. Cl.4) |
| A | DE-A-3 025 145 (KNAPP-BOETTICHER) <br> * Claim 1; figures 1-3 * | 1-5 | B 62 D <br> B 60 P |

The present search report has been drawn up for all claims

| Place of search | Date of completion of the search | Examiner |
|---|---|---|
| THE HAGUE | 23-01-1986 | SCHMITTER J.M. |